# EUROPEAN PATENT APPLICATION

(11) **EP 2 258 550 A1**
(43) Date of publication of application: **08.12.2010**
(21) Application number: 09719332.0
(22) Date of filing: 26.02.2009
(51) Int. Cl.: B32B 27/36, C08K 5/49, C08L 67/00

(54) **POLYESTER FILM**

(30) Priority: 13.03.2008 JP 2008065000
(71) Applicant: Mitsubishi Plastics, Inc., Tokyo 103-0021 (JP)
(72) Inventor: FUJITA, Masato, Maibara-shi Shiga 521-0234 (JP)
(74) Representative: Merkle, Gebhard
(86) International application number: PCT/JP2009/000846
(87) International publication number: WO 2009/113259

(57) **Abstract**

An object of the present invention is to provide a polyester film which is reduced in yellow discoloration, has a high quality and can be suitably used for optical filters (for example AR films, NIR films and EMI films), films for liquid crystal applications (for example diffraction films and prism films), materials for electric appliance, films for packaging, materials for graphic appliance (photograph materials), plate making films, OHP films or the like.

The aspect of the present invention is a polyester film comprising at least one polyester layer comprising reclaimed resin of polyester film having a coating layer, which polyester layer comprising a phosphorus-based antioxidant having a starting temperature of loss on heat of not lower than 290°C.

## Description

### TECHNICAL FIELD

The present invention relates to a polyester film which uses a polyester film having a coating layer as a reclaimed resin and has a property of low yellow discoloration. More specifically, the present invention relates to a polyester film having such properties that when a film is cast by use of a polyester containing a reclaimed resin, yellow discoloration of film is low, and the film is useful for optical filters such as AR films, NIR films and EMI films, films for liquid-crystal such as diffusion films and prism films, electronic materials, packaging films, graphic materials (photographic materials), plate making films, OHP films or the like.

### BACKGROUND ART

Polyester films such as polyethylene terephthalate films and polyethylene naphthalate films are widely used for optical filters such as AR films, NIR films and EMI films, films for liquid-crystal such as diffusion films and prism films, electronic materials, packaging films, graphic materials (photographic materials), plate making films, OHP films as general industrial materials.

Since these polyester films have a poor adhesiveness to an overcoat functional layer thereof in each application, there are defects that various layers laminated thereon by post-processing are likely to be released therefrom, dirt and dust are easily attached to the film surface because they are easily electrostatically charged by friction, or the like.

In order to improve the above defects in polyester films, there is generally used such a polyester film that a coating layer such as an adhesive promotion layer exhibiting a good adhesion property and an antistatic coating layer is provided on the surface of polyester film.

When producing a polyester film by tenter method or simultaneously biaxial stretching method which necessary holds the edge of polyester film, films which cannot be usable for a commercial product (for example, film edge portions cut and removed from the product films) and films which do not satisfy the prescribed length because of breaking in the film production and poor quality are generated. In order to produce a polyester film cost effectively, such a method that these films which cannot be used for a commercial product is recovered and recycled as a reclaimed resin.

However, if as the reclaimed resin in the above method, the above film having any coating layer is applied to the above method, the components of coating layer containing in the reclaimed resin are thermally decomposed or deteriorated because the extrusion step is conducted at the temperature not lower than the resin melting point (in case of polyethylene terephthalate: 260°C or higher, in case of polyethylene naphthalate: 270°C or higher) when casting the polyester resin. Therefore, the resulting polyester film to be a commercial product is yellow discolored and the polyester film obtained by using the polyester containing the reclaimed resin is significantly yellow discolored and is poor in practically use.

Especially, in case where the coating layer contains a structure having a thermal resistance of lower than 260°C (for example, polyvinyl alcohol: decomposed at 200°C or higher) and a compound having nitrogen atom, sulfur atom, chlorine atom or the like, especially nitrogen atom in the molecule, the yellow discoloration of film becomes significant because these compounds are subject to thermal deterioration. Therefore, the compound contained in the coating layer is limited and whereby it is difficult to obtain a polyester film excellent in adhesion and antistatic properties as well as recyclability.

To the above problem, conventionally, there have been known a method using an antioxidant at the production of reclaimed pellets (refer to Patent Documents 1 and 2) and a method adding an antioxidant at the casting and laminating stages (refer to Patent Documents 3 to 5). By employing these methods, although there is an improvement for the yellow discoloration, the improvement is not sufficient for attaining the preventing ability of yellow discoloration and the film quality for practically use because of high melting point of polyester resin (about 260°C) and high temperature of film processing (about 290°C).

Specifically, in case of using a phosphorus-based antioxidant disclosed in Patent Document 1, since the phosphorus-based antioxidant is liquid at ordinary temperature, the phosphorus-based antioxidant evaporates at the stage of drying step of polyester resin (in case of polyethylene terephthalate: about 180°C) and extrusion step (in case of polyethylene terephthalate: about 290°C). Further, the odor and smoke generation therefrom affect to environment of polyester film production. Still further, there are problems that the antioxidant is attached to the rollers after heat-setting the film, the uniformity of coating layer at the coating and drying steps as the post-processing stage is deteriorated and the improvement of preventing the yellow discoloration is insufficient because the temperature of starting loss of antioxidant on heat is lower than the melt-extrusion temperature of polyester (about 290°C or higher). Further, in case of using an antioxidant disclosed in Patent Document 2, there is also a problem that the improvement of preventing the yellow discoloration is insufficient because the temperature of starting loss of antioxidant on heat is lower than the melt-extrusion temperature of polyester (about 290°C or higher). Although the effect of preventing the yellow discoloration can be recognized by increasing the amount of antioxidant added thereto, the improvement is still insufficient and film rollers in the production system are contaminated by deposition of antioxidant on the film surface because of increasing the antioxidant amount.
Patent Document 1: Japanese Patent Application Laid-Open (KOKAI) No. 3-275727
Patent Document 2: Japanese Patent Application Laid-Open (KOKAI) No. 4-59828
Patent Document 3: Japanese Patent Application Laid-Open (KOKAI) No. 8-217892
Patent Document 4: Japanese Patent Application Laid-Open (KOKAI) No. 8-217893
Patent Document 5: Japanese Patent Application Laid-Open (KOKAI) No. 2000-119417

### DISCLOSURE OF THE INVENTION

### PROBLEM TO BE SOLVED BY THE INVENTION

The present invention has been conducted to solve the above problems. An object of the present invention is to provide a polyester film which overcomes the above conventional problems and has such a high quality that the yellow discoloration is effectively prevented even though using a film having a coating layer as the reclaimed resin.

### MEANS FOR SOLVING THE PROBLEM

As a result of present inventors' earnest study to solve the above problems, it has been found that the above object can be easily attained by employing a specific constitution. The present invention has been attained on the basis of the above finding.

Thus, in an aspect of the present invention, there is provided a polyester film comprising at least one polyester layer comprising reclaimed resin of polyester film having a coating layer, which polyester layer comprising a phosphorus-based antioxidant having a starting temperature of loss on heat of not lower than 290°C.

### EFFECT OF THE INVENTION

According to the present invention, there can be obtained a practically usable polyester film having the property of preventing the yellow discoloration. The present invention makes great contribution in the environment and cost effect in the production of polyester film having an adhesive promotion layer exhibiting a good adhesion property and useful for optical filters such as AR films, NIR films and EMI films, films for liquid-crystal such as diffusion films and prism films, electronic materials, packaging films, graphic materials (photographic materials), plate making films, OHP films or the like.

### PREFERRED EMBODIMENT FOR CARRYING OUT THE INVENTION

The present invention is described in more detail below.
The polyester film according to the present invention is a polyester film obtained by using a polyester film having a coating layer as a reclaimed resin. In the polyester film, the reclaimed resin and a phosphorus-based antioxidant having a starting temperature of loss on heat of not lower than 290°C are contained in the same layer to the reclaimed resin. The polyester film of the present invention may comprise single layer or laminated layers, however, it is required to contain the reclaimed resin and antioxidant in the same layer. Further, in order to provide a high quality polyester film in the post-processing, it is preferred that the reclaimed resin and antioxidant are contained in the intermediate layer and are not contained in the surface layers.

The polyester film according to the present invention can be produced by generally known methods. For example, the polyester film may be produced by a method comprising melting the polyester containing the above reclaimed resin in an extruder and casting it through a die for single layer onto a cooling drum to as a single layer sheet, or melting the polyester containing the above reclaimed resin in at least one extruder of plural extruders and casting it through at least one die for a multilayer onto a cooling drum to as a multilayer sheet, to form an unstretched film, and stretching the unstretched film in the machine direction and then stretching it in the transverse direction.

Further, it is possible to stretch the film in the machine direction and/or the transverse direction again.
The stretching treatment is preferably conducted under a temperature higher than (the glass transition temperature (Tg) of polyester constituting the above single layer sheet or multilayer sheet - 10°C), in the stretching ratio of two or more times, preferably three or more times in each direction. In this, the area stretching ratio is preferably eight or more times, more preferably nine or more times. Although due to the application thereof, the upper limit of the area stretching ratio is usually 35 times, preferably 30 times.

In single layer polyester film or at least one outermost layer of multi-layers polyester film, organic or inorganic fine particles having an average particle diameter of 0.01 to 20 µm can be contained thereinto as a lubricant in a blending amount of for example 0.005 to 20% by weight in order to attain good slipping property. As concrete examples of such fine particles, there are preferably exemplified calcium carbonate, calcium oxide, aluminum oxide, titanium oxide, graphite, kaolin, silicon oxide, zinc oxide, carbon black, silicon carbide, tin oxide, acrylic resin particles, cross-linked polystyrene resin particles, melamine resin particles, silicone resin particles, or the like.

In the polyester film, in addition to the above fin particles, there may be added an antistatic agent, organic lubricant, catalyst, pigment, fluorescent whitener, plasticizer, slipping agent, UV absorber, other resin, or the like, if required.

The polyester film according to the present invention may or may not have a coating layer. For example, there are exemplified an unstretched film obtained by thermal-melting the polyester or polyester containing the reclaimed resin and forming it to a film-shape; a monoaxially stretched film obtained by stretching an unstretched film in the machine direction (machine direction) or transverse direction (film width direction); a biaxially stretched film obtained by stepwise stretching the monoaxially stretched film in the machine direction or transverse direction, or obtained by simultaneously stretching the unstretched film in both machine direction and transverse direction; heat treated biaxially stretched film obtained by heat-setting the and/or heat-relaxing the biaxially stretched film: or the like.

The thickness of the polyester film is generally 10 to 3000 µm in case of non-stretched film, and 1 to 400 µm in case of biaxially oriented film and biaxially oriented heat-treated film.

The polyester materials used for the preparation of polyester film according to the present invention is a linear polyester comprising a dicarboxylic acid component and glycol component. As the representative polyester materials, there are exemplified polyethylene terephthalate, polyethylene-2,6-naphthalate, or the like. These are preferable to be able to obtain a polyester film having excellent mechanical strength such as Young's modulus, heat resistance dimension stability, or the like.

The polyester material used in the present invention is explained below in more detail. As the dicarboxylic acid component, there are exemplified terephthalic acid, isophthalic acid, 2,6-naphthalene dicarboxylic acid, cyclohexane dicarboxylic acid, 4,4'-diphenyl dicarboxylic acid, adipic acid, sebacic acid, dodecane dicarboxylic acid or the like. Of these, terephthalic acid and 2,6-naphthalene dicarboxylic acid are especially preferred. As the glycol component, there are exemplified ethylene glycol, diethylene glycol, propylene glycol, 1,3-propanediol, 1,4-butanediol, neopentyl glycol, 1,5-pentanediol, 1,6-hexanediol, cyclohexane dimethanol, polyethylene glycol, polytetramethylene glycol or the like. Of these, ethylene glycol is especially preferred.

This polyethylene terephthalate or polyethylene 2,6-naphthalate may be a polyester further copolymerized with the above mentioned dicarboxylic acid components or glycol components in an amount of few mol% so as to impart any desired film property, as well as a polyester further copolymerized with a tri- or more functional polycarboxylic acid component or polyol component in such small amount (for example 5 mol% or less) that the obtained polyester is substantially a linear polymer.

The above polyesters can be produced by any general methods. In order to attain good mechanical properties of polyester film, the number average molecular weight is preferably not less than 10000.

In the present invention, there is a possibility that the polymerization catalyst for producing the polyester may be inactivated by the reduction action of phosphorus-based antioxidant and precipitated to become a foreign substance in the film. Therefore, in case of using the film for any applications requiring strictly limitation of the foreign substance content such as optical applications, the smaller content of the catalyst is preferred. The catalyst metal content is usually not more than 300 ppm, preferably not more than 200 ppm, more preferably not more than 100 ppm, especially preferably not more than 50 ppm.

In the present invention, the antioxidant contained in the polyester film is the phosphorus-based antioxidant having a starting temperature of loss on heat of not lower than 290°C. As example of the antioxidant contained in the polyester film, a phosphorus-based compound having the following chemical structure is preferred because the starting temperature of loss on heat is as high as 295°C and small yellow discoloration and good hue of polyester film are attained even though the polyester film having a coating layer is contained as the reclaimed resin.

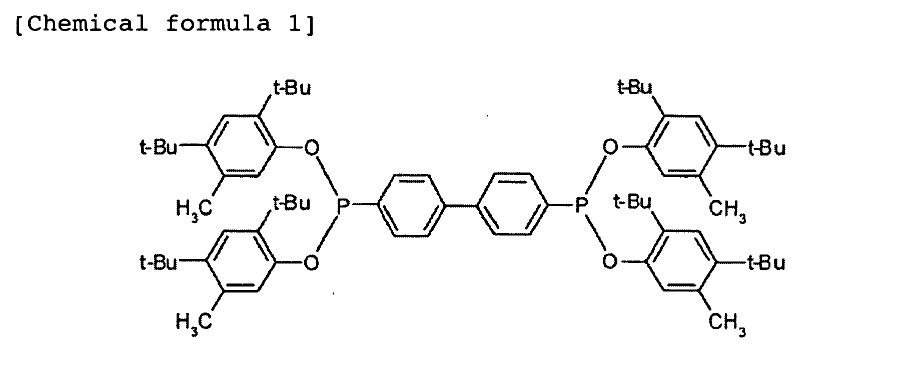

In the above chemical formula, "t-Bu" represents a tertiary butyl group.
In the present invention, the blending amount of phosphorus-based antioxidant to the polyester is optionally selected in accordance with the content of polyester film having a coating layer as the reclaimed resin and the kind of coating layer. In practical use, the content of phosphorus-based antioxidant is for example 10 to 10000 ppm, preferably 200 to 5000 ppm. When the content is less than 10 ppm, the effect of preventing yellow discoloration is in sufficient. On the other hand, using the phosphorus-based antioxidant in an amount of more than 10000 ppm is disadvantageous in cost and further, undesired effect to the processing process by the precipitation of antioxidant on the surface may not be neglected.

As the method for blending the antioxidant into the polyester, there is no specific limitation as long as the antioxidant is uniformly dispersed into the polyester layer containing the polyester film having a coating layer as the reclaimed resin, and there are exemplified a method comprising melt-mixing the polyester and antioxidant and using it as a pellet, a method comprising using a master pellet of antioxidant with a high concentration as one of materials, a method comprising directly adding the antioxidant into the polyester at the stage of melt-casting, a method comprising blending the antioxidant at the stage of polymerization to form the polyester, or the like.

As the antioxidant used in the present invention, in addition to the phosphorus-based antioxidant having a starting temperature of loss on heat of not lower than 290°C, at least one antioxidant selected from the group consisting of phenol-based antioxidants may be used in combination. In case of using only a phenol-based antioxidant, it may be difficult to prevent the discoloration of polyester film in the stage of heating at 290°C or higher. However, by using the phenol-based antioxidant and the phosphorus-based antioxidant used in the present invention in combination, there is a possibility to enhance the technical effect of preventing the yellow discoloration in the polyester film production process and this is preferred.

In this case, the phenol-based antioxidant used in combination is not specified, but usually, a phenol-based antioxidant having a phenolic group whose at least one hydrogen atom is substituted with a tertiary butyl group. Further, a compound having a backbone structure as shown the following is exemplified.

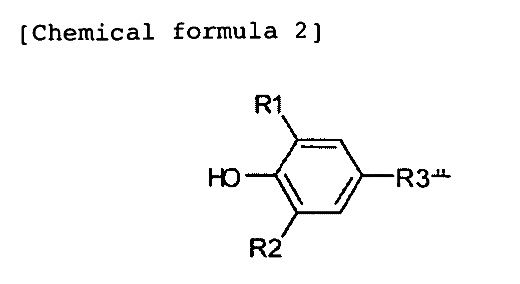

In the above formula, R¹ and R² represent independently an alkyl group having a carbon number of 1 to 4, R³ represents an alkylene group having a carbon number of 2 or more.

In the above compounds, it is preferred to use a phenol-based antioxidant having at least one tertiary butyl group at the adjacent position to the hydroxyl group and ester group as the substituted groups and the phosphorus-based antioxidant according to the present invention in combination so that because the good hue of polyester film can be attained. As concrete preferred examples of phenol-based antioxidant, there are exemplified phenol-based antioxidants having the following structure (CAS Reg. No. 6683-19-8, starting temperature of loss on heat: 313°C).

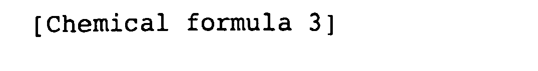

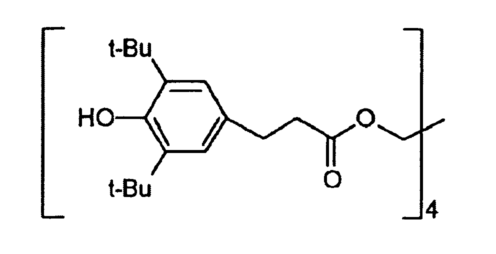

In the above formula, "t-Bu" is a tertiary butyl group.

Further, the following phenol-based antioxidants having the following structure (CAS Reg. No. 1709-70-2, starting temperature of loss on heat: 290°C) can be preferably used.

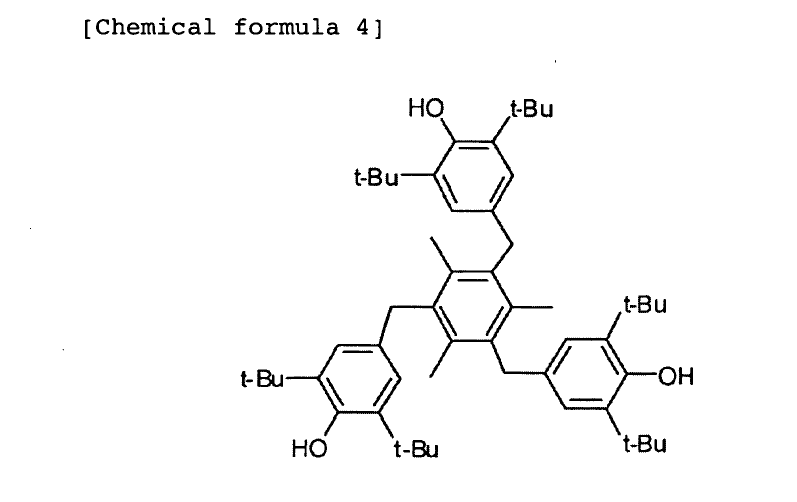

In the above formula, "t-Bu" is a tertiary butyl group.

In the phenol-based antioxidant used with the phosphorus-based antioxidant according to the present invention in combination, it is preferred to have the starting temperature of loss on heat of 290°C or higher. When the starting temperature of loss on heat is 290°C or lower, there may be a possibility that the yellow discoloration is increased because the thermally decomposed or deteriorated of coating layer and further of antioxidant proceed at the melt-extrusion of polyester.

The reclaimed resin or reclaimed pellet used in the present invention is a ground product obtained by grinding a film scrap generated from the production of polyester film having a coating layer on at least one surface thereof or reclaimed pellet obtained by melt-extruding the ground product. These reclaimed resins can be used for the melt-casting process in the single form or mixed form with other polyester virgin pellet.

The percentage of polyester having the coating layer used as the reclaimed resin in the polyester raw material used for producing the polyester film is usually not less than 15% by weight, preferably not less than 30% by weight, especially preferably not less than 45% by weight. The upper limit thereof is not specified but it is practical that he upper limit is not more than 60% by weigh in view of melting viscosity of polyester, discoloration degree of film and material yield in the production.

The coating layer of the polyester film having the coating layer used in the present invention comprises preferably at least one resin selected from the group consisting of polyurethane resin, acrylic resin/vinyl-based resin, polyether resin, cellulose-based resin, epoxy resin, nylon resin, gelatins, carbodiimide resin, melamine/urea-based cross-linking agent and oxazoline cross-linking agent.

The number average molecular weight of resin forming the coating layer of the polyester film having the coating layer is preferably within the following range. When the number average molecular weight satisfies the following range, the adhesiveness between the coating layer and polyester film and toughness of coating layer are enhanced.

The above polyurethane resin is a polymer or copolymer obtained from polyfunctional isocyanate and a compound having polyhydroxyl group. The number average molecular weigh is preferably 5000 to 25000. The polyurethane resin can be produced by using for example diisocyanate, polyether, polyester, glycol, diamine, dimethylolpropionic acid salt, and preferably used in the form of emulsion or aqueous solution.

The above acrylic resin is a polymer or copolymer mainly comprising an acrylic monomer such as for example ethyl acrylate, methyl acrylate, acrylic acid, butyl acrylate, sodium acrylate, ammonium acrylate, ethyl methacrylate, methyl methacrylate, methacrylic acid, butyl methacrylate, glycidyl methacrylate, 2-hydroxyethyl acrylate, acrylamide, methacrylamide, N-methoxymethyl acrylamide and N-methylol acrylamide. The number average molecular weight is preferably 5000 to 250000.

The above vinyl resin is a polymer or copolymer obtained from a monomer having a unsaturated double bond in the molecule which mainly comprises styrene, -methylstyrene, sodium styrene sulfonate, vinyl chloride, vinylidene chloride, vinyl acetate, vinyl ether, sodium vinyl sulfonate, sodium methallylate, polyvinyl alcohol or polyvinyl butyral. The number average molecular weight is preferably 5000 to 250000.

As the above polyether resin, there are exemplified polyethylene oxide, polypropylene oxide, phenoxy resin or the like. The number average molecular weight is preferably 800 to 400000.

The above cellulose-based resin is a resin having a cellulose structure in the molecule such as methyl cellulose and nitro cellulose.

The above epoxy resin is a polymer of copolymer obtained from a compound having two or more functional glycidyl groups in the molecule. The number average molecular weight is preferably 150 to 30000. As the above compound, there are exemplified bisphenol glycidyl ether, glycerin polyglycidyl ether, amino glycidyl ether or the like.

As the above nylon resin, there are exemplified methoxymethylated 6-nylon and 6,6-nylon, and copolymers thereof with acrylic acid.

The gelatin is a polypeptide having a high molecular weight and products obtained from a protein material such as collagen are mentioned.

The carbodiimide-based cross-linking agent is a compound having two or more functional carbodiimide groups in a molecule, and polyfunctional carbodiimide-containing resins are mentioned.

The melamine is a compound two or more functional thermal reactive cross-linking groups such as a methoxymethyl group, and methylol group and hexamthoxymethyl melamine are mentioned.

The oxazoline-based cross-linking agent is a compound having two or more functional oxazoline groups in a molecule and a multi functional oxazoline-containing resin copolymerized with isopropenyl oxazoline is preferably used.

These resins may be used singly or in combination of two or more.

In the polyester film having the coating layer on at least one surface, the method for providing the coating layer on at least one surface of the film is not specified. As the method, there are exemplified a method comprising using and coating aqueous coating liquid comprising the coating layer forming resin, a method comprising coating solvent system comprising the coating layer forming resin and liquid, or the like. Of these, a method using the aqueous coating liquid is especially preferred. In the following, this method is used as an example for the explanation.

In the polyester film having the coating layer, the thickness of coating layer is preferably 5 to 1000 g/m², more preferably 10 to 500 mg/m², especially preferably 15 to 200 mg/m². When the coating amount is less than 5 mg/m², the function required of the coating layer (primer properties such as improvement of adhesion and antistatic property) may be deteriorated. When the coating amount is more than 1000 g/m², the blocking of coat may occur and the coat may be planed more likely.

In the polyester film having the coating layer, in case of coating by use of the above method comprising using and coating aqueous coating liquid comprising the coating layer forming resin, organic or inorganic particles having an average particle size of 0.002 to 1 µm are added as a lubricant into the aqueous coating liquid in such a manner that the blending percentage of particles in the solid coating film is adjusted to 0.5 to 20% by weight, in order to attain good sliding property of coating layer surface and good anti-blocking property of film.

As the above lubricant, there are exemplified inorganic fine particles such as calcium carbonate, calcium oxide, aluminum oxide, titanium oxide, graphite, kaolin, silicon oxide, zinc oxide, carbon black, silicon carbide and tin oxide, and organic fine particles such as a polystyrene resin, acrylic resin, melamine resin, silicone resin, fluorine contained resin, urea resin, benzoguanamine resin, polyamide resin and polyester resin. These organic fine particles may be thermoplastic resin fine particles as long as it can be contained in the coat as the solid state, also may be resin fine particles having cross-linking structure.

Into the aqueous coating liquid, as the other component, it is possible to blend a coating layer forming resin other than the above mentioned resins (polyester resin, polyolefin resin or the like), surfactants, low molecular weight anti-static agents, plasticizers, cross-linking agents, lubricants (agents having an ability of imparting sliding property such as waxes), UV absorbers or the like.

The solid content concentration of the aqueous coating liquid is preferably 1 to 30% by weight, especially preferably 2 to 20% by weight. When the solid content concentration is within this range, the viscosity of aqueous coating liquid is suitable for coating. The aqueous coating liquid used in the present invention can be used in any optional form of aqueous solution, aqueous dispersion, emulsion or the like. Further, in the aqueous coating liquid, small amount of organic solvent may be contained.

In the polyester film having the coating layer, in case where the coating layer is formed by coating the above aqueous coating liquid on at least one surface of polyester film, heating and drying it and stretching the film, known coating methods can be used as the coating method. As the known coating methods, there are exemplified gravure coating method, reverse roll coating method, die coating method,
kiss coating method, reverse kiss coating method, offset gravure coating method, Mayer bar coating method, roll brushing method, spray coating method, air knife coating method, immersing method, curtain coating method or the like. These are employed singly or two or more methods are employed in combination. The wet coating amount of the aqueous coating liquid is preferably 1 to 20 g, especially preferably 2 to 10g based on 1 m² of running film. When the coating amount is within this range, the coating liquid is easily dried and a coating fish-eye is hardly generated and therefore this is preferable.

In the polyester film having the coating layer, it is preferred that the aqueous coating liquid is coated on the above polyester film or stretchable polyester film such as monoaxially stretched film, especially longitudinally monoaxially stretched film (stretched in machine direction) and dried, and the film is stretched and heat-set (200°C or higher), so that the adhesion between the coat and polyester base film is strong and the polyester film having the coating layer can be produced effectively. For example, the polyester containing the reclaimed resin comprising the polyester or polyester film having the coating layer is heat-melted, melt-extruded sheet-likely and quenched to form an unstretched film, thus obtained unstretched film is stretched in machine direction to form a monoaxial stretched film, the aqueous coating liquid is coated to the surface of monoaxial stretched film, the film is dried while stretching in transverse direction, further the film is stretched in machine direction and/or transverse direction again, if required, and then the obtained film is heat-set to form a coating layer.

### EXAMPLES

The present invention is described in more detail by the following Examples. However, these Examples are only illustrative and not intended to limit the scope of the present invention. The property values of the film were measured by the following test methods. Meanwhile, the polyesters used in the following Examples and Comparative Examples are shown in the following.

### <Polyester (A)>

Polyester (A) contained antimony trioxide as the polymerization catalyst and had an intrinsic viscosity of 0.66 dl/g. The amount of catalyst metal compound contained in the polyester was about 200 ppm.

### <Polyester (B)>

Polyester (B) contained tetrabutoxy titanate as the polymerization catalyst and had an intrinsic viscosity of 0.63 dl/g. The amount of catalyst metal contained in the polyester was about 10 ppm.

### <Polyester (C)>

Polyester (C) contained magnesium acetate and germanium dioxide as the polymerization catalyst and had an intrinsic viscosity of 0.65 dl/g. The amount of catalyst metal contained in the polyester was about 10 ppm.

### <Polyester (D)>

Polyester (D) comprised polyester (A) containing antimony trioxide as the polymerization catalyst and having an intrinsic viscosity of 0.65 dl/g, and silica particles having an average particle size of 2.0 µm in an amount of 0.2% by weight. The amount of catalyst metal compound contained in the polyester was about 200 ppm.

### (1) Intrinsic viscosity:

The intrinsic viscosity was measured in such a manner that 1g of pellet was dissolved into 100 ml of mixed solvent of phenol/tetrachloroetane (50/50, weight ratio) and the viscosity was measured at 30°C.

### (2) Catalyst metal amount:

The catalyst metal amount was measured by fluorescent X-ray analysis (XRF) with a calibration.

### (3) Starting temperature of loss on heat:

The starting temperature of loss on heat was measured by conducting a thermogravimetric analysis (TG/DTA) under condition of heating rate of 10°C/min in nitrogen atmosphere and determining a temperature where 1% weight was reduced as the starting temperature of loss on heat.

### (4) Yellow discoloration of polyester pellet 1:

A polyester pellet obtained by drying and crystallizing a polyester at 180°C was melted at 300°C and pelletized again in a small size extruder (Labo Plastomil manufactured by Toyo Seiki Seisaku-sho, LTD.) to form a blank pellet. On the other hand, a polyester pellet containing a polyester film having a coating layer as the reclaimed resin was prepared and the yellow discoloration thereof was evaluated by the following evaluation criterion. Namely, the measurement of yellow discoloration was evaluated by visual evaluation by comparing the color of pellet with the color of blank pellet.
Rank A: The yellow discoloration of pellet is the same level of that of blank pellet.
Rank B: The pellet is slightly yellow-discolored but there is no problem in practically use.
Rank C: The pellet is yellow-discolored and a limitation of blending amount is required in practically use.
Rank D: The pellet is seriously yellow-discolored and it is not suitable to use it practically.

### (5) Yellow discoloration of polyester pellet 2:

A polyester film having no coating layer was ground, melted in an extruder at 300°C and pelletized. Then, the obtained pellet was melt-cast to for a blank film. On the other hand, a polyester film containing a polyester film having a coating layer as the reclaimed resin was prepared. The yellow discoloration of the film was evaluated by the following evaluation criterion. The thickness of obtained film was about 100 µm. The measurement of yellow discoloration was evaluated by visual evaluation from the edge surface of roll-like wound film by comparing the color of roll-like wound film with the color of roll-like wound blank film.
Rank A: The yellow discoloration of edge surface is the same level of that of blank film.
Rank B: The edge surface of film is slightly yellow-discolored but there is no problem in practically use.
Rank C: The edge surface of film is yellow-discolored and a limitation of blending amount is required in practically use.
Rank D: The edge surface of film is seriously yellow-discolored and it is not suitable to use it practically.

### (6) Odor

In the polyester melt-extrusion step, it was confirmed whether odor around the extruder was felt. When any specific odor different from the usual odor by use of the antioxidant was not felt around the extruder, the evaluation was "good" and when any undesirable odor was felt, the evaluation was "bad".

### (7) Roll contamination:

In the polyester casting step, contamination of rolls around the winding equipment was confirmed. In the film winding step and slitting step after tentering, when any whitening of rolls by use of antioxidant was not confirmed in the same way to a usual process, the evaluation was Rank A. When any whitening of rolls was generated rapidly than that of usual process and any whitening of rolls was confirmed within from one day to seven days in continuous production process, the evaluation was Rank B. When any whitening of rolls was confirmed within one day in continuous production process, the evaluation was Rank C.

The following antioxidants were used in Examples. •Antioxidant [P1]: Tetrakis(2,4-di-tert-butyl-5-methyl phenyl)-4,4'-biphenylene diphosphonite (CAS Reg. No. 178358-58-2, starting temperature of loss on heat: 295°C)

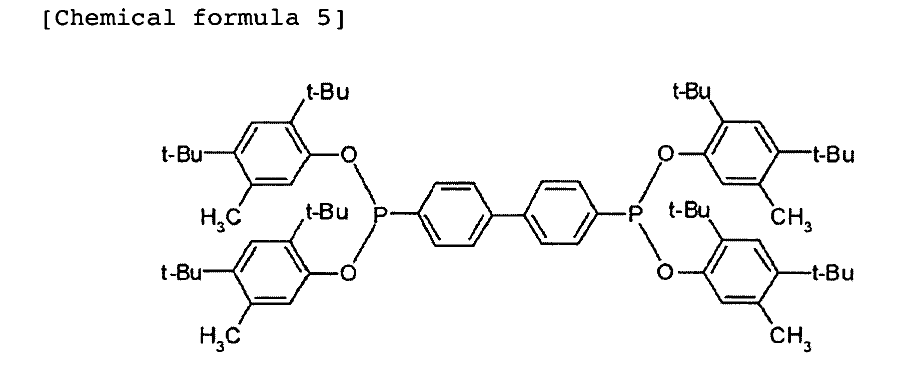

In the above formula, "t-Bu" represents tertiary butyl group.

- Antioxidant [P2]: Tridecyl phosphonite (CAS Reg. No. 25448-25-3, starting temperature of loss on heat: 176°C (liquid))

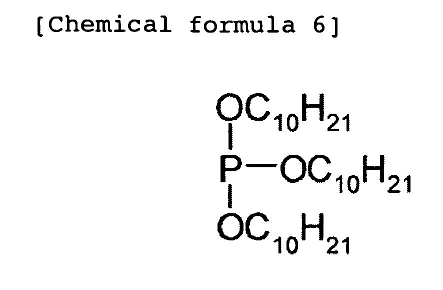

- Antioxidant [P3]: Bis(2,6-di-tert-butyl-4-methylphenyl) pentaerythritol diphosphonite (CAS Reg. No. 80693-00-1, starting temperature of loss on heat: 261°C)

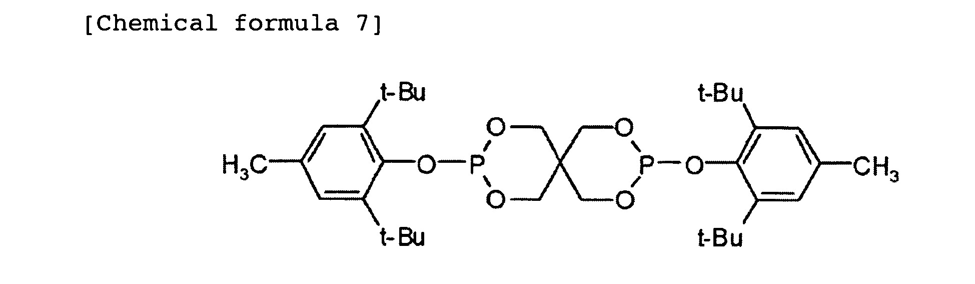

In the above formula, "t-Bu" represents tertiary butyl group.

- Antioxidant [PH]: Tetrakis[methylene-3-(3,5-di-tert-butyl-4-hydroxyphenyl)propionate]methane (CAS Reg. No. 6683-19-8, starting temperature of loss on heat: 313°C)

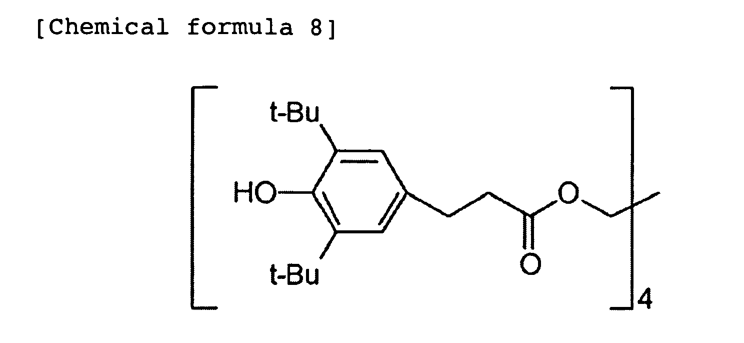

In the above formula, "t-Bu" represents tertiary butyl group.

[Polyurethane 1] Aliphatic polyester-based polyurethane: HYDRAN AP-40 (manufactured by DIC Corporation)

[Polyurethane 2] Aliphatic polyether-based polyurethane: NEOREZ R-600 (manufactured by DSM NeoResins)

[Polyurethane 3] Aliphatic polycarbonate polyurethane: TAKERAK W-511 (manufactured by Mitsui-Takeda Chemical Co., Ltd.)

[Carbodiimide] Polycarbodiimide resin: CARBODILITE V-02 (manufactured by Nisshinbo Chemical Inc.)

[Acrylic resin] N-methylol group and carboxyl group-containing MMA**•**EA copolymer acrylic emulsion: NIKASOL A-08 (manufactured by NIPPON CARBIDE INDUSTRIES CO., INC.)

[PVA] Polyvinyl alcohol (saponification degree: 88%): GOHSENOL GL-05 (manufactured by The Nippon Synthetic Chemical Industry Co., Ltd.)

[Oxazoline cross-linking agent] Vinyl resin containing oxazoline group: EPOCROS WS-500 (manufactured by NIPPON SHOKUBAI CO., LTD.)

[Melamine] Methoxymethylated melamine: BECKAMINE J101 (manufactured by DIC Corporation)

[Polyester] Copolyester containing sulfo-isophthalate group: FINEDIC ES670 (manufactured by DIC Corporation)

[Silica] Colloidal silica: SNOWTEX YL (manufactured by Nissan Chemical Industries, Ltd.)

**[Table 1]**

| Coating layer | 1 | 2 | 3 | 4 | 5 | 6 | 7 |
|---|---|---|---|---|---|---|---|
| Polyurethane 1 | 65 | - | 40 | - | - | 20 | - |
| Polyurethane 2 | - | 50 | - | - | - | - | - |
| Polyurethane 3 | - | - | 30 | - | - | - | - |
| Carbodiimide | - | - | - | 20 | - | - | - |
| Acrylic resin | - | 40 | - | 55 | - | 35 | 20 |
| PVA | - | - | - | - | 60 | - | - |
| Oxazoline | - | - | - | - | - | 30 | - |
| Melamine | 10 | 10 | 10 | - | 15 | - | 30 |
| Polyester | 20 | - | 15 | 20 | 20 | 10 | 45 |
| Silica | 5 | 5 | 5 | 5 | 5 | 5 | 5 |

### [Coated film A1] Polyester film having the coating layer 1:

A polyester (A) was heat-melted and extruded from T-die onto a cooling drum at the temperature of 40°C to solidify it and form an unstretched sheet. The sheet was stretched for 3.6 times in the machine direction at 85 to 100°C to obtain a monoaxial stretched film. Onto both the surfaces of the film, the coating composition of coating layer 1 shown in the above Table 1 was coated by use of bar coater equipment. After the obtained coated film was dried at 90 to 105°C, the dried film was stretched for 4.3 times in the transverse direction at 110°C and heat-treated at 225 to 230°C to obtain a coated film A1 having a thickness of 100 µm and coating amount of 0.1 g/m².

### [Coated film A2] Polyester film having the coating layer 2:

The same production steps as described in the above coated film A1 was conducted except for using the coating composition of coating layer 2 as the coating liquid to obtain a coated film A2.

### [Coated film A3] Polyester film having the coating layer 3:

The same production steps as described in the above coated film A1 was conducted except for using the coating composition of coating layer 3 as the coating liquid to obtain a coated film A3.

### [Coated film A4] Polyester film having the coating layer 4:

The same production steps as described in the above coated film A1 was conducted except for using the coating composition of coating layer 4 as the coating liquid to obtain a coated film A4.

### [Coated film A5] Polyester film having the coating layer 5:

The same production steps as described in the above coated film A1 was conducted except for using the coating composition of coating layer 5 as the coating liquid to obtain a coated film A5.

### [Coated film A6] Polyester film having the coating layer 6:

The same production steps as described in the above coated film A1 was conducted except for using the coating composition of coating layer 6 as the coating liquid to obtain a coated film A6.

### [Coated film A7] Polyester film having the coating layer 7:

The same production steps as described in the above coated film A1 was conducted except for using the coating composition of coating layer 7 as the coating liquid to obtain a coated film A7.

### Comparative Example 1:

First, a polyester pellet containing the coating layer 1 (without antioxidant) was produced. Namely, the coated film A1 was ground, melt-extruded at 290 to 300°C and pelletized again to obtain reclaimed pellet 1A0.

### Comparative Example 2:

A polyester pellet containing the coating layer 2 (without antioxidant) was produced. Namely, the same procedure described in the production of reclaimed pellet 1A0 except for using the coated film A2 as the coated film to obtain reclaimed pellet 2A0.

### Example 1:

A polyester pellet containing the coating layer 1 (containing antioxidant) was produced. Namely, the coated film A1 was ground, melt-extruded at 290 to 300°C while adding an anttioxidant and pelletized again to obtain reclaimed pellet 1A1. The amount of added antioxidant was 500 ppm based on the reclaimed pellet.

Further, in Examples 1 to 12 and Comparative Examples 1 to 13, respective reclaimed pellets were obtained by varying the kind and amount of antioxidants as shown in the following Table 2.

### Reference Example 1:

A polyester pellet containing a polyester film having no coating layer as the reclaimed resin (without antioxidant) was produced.

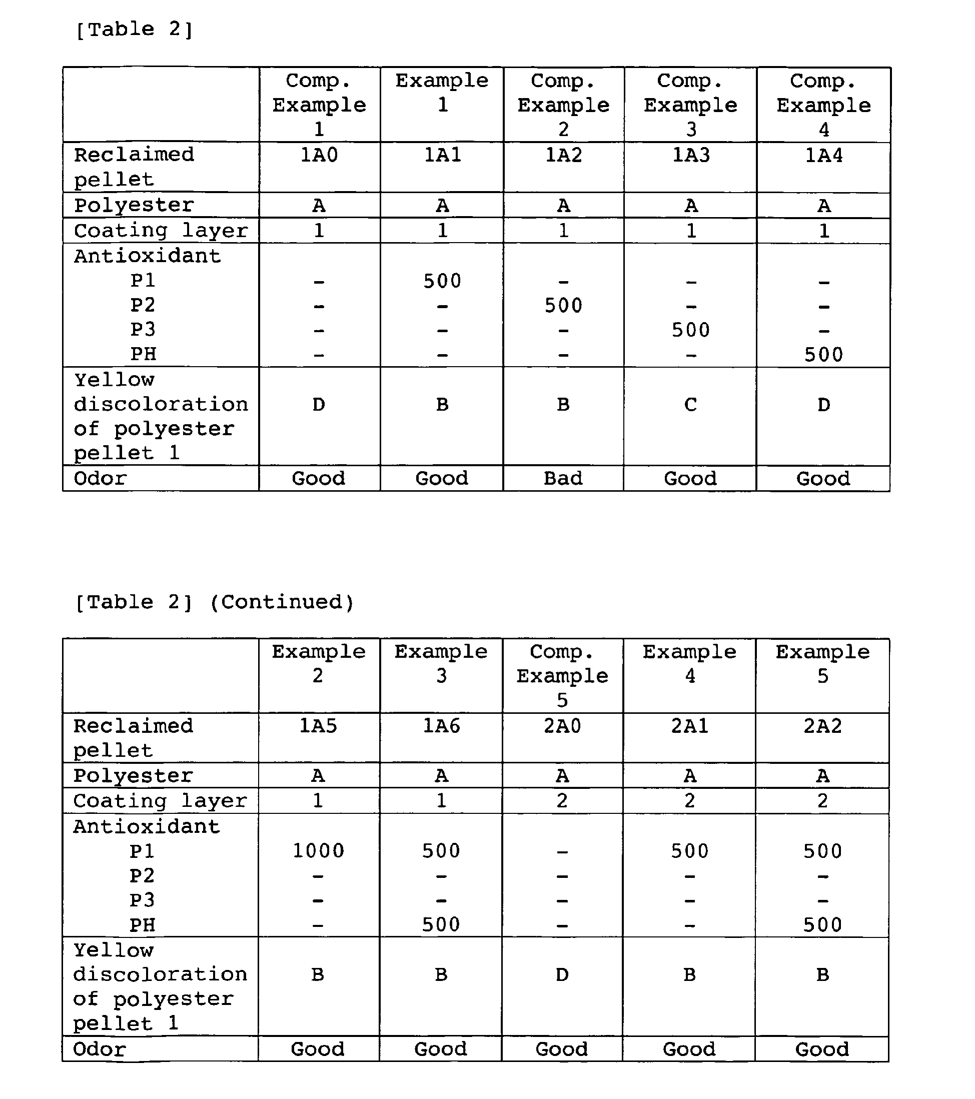

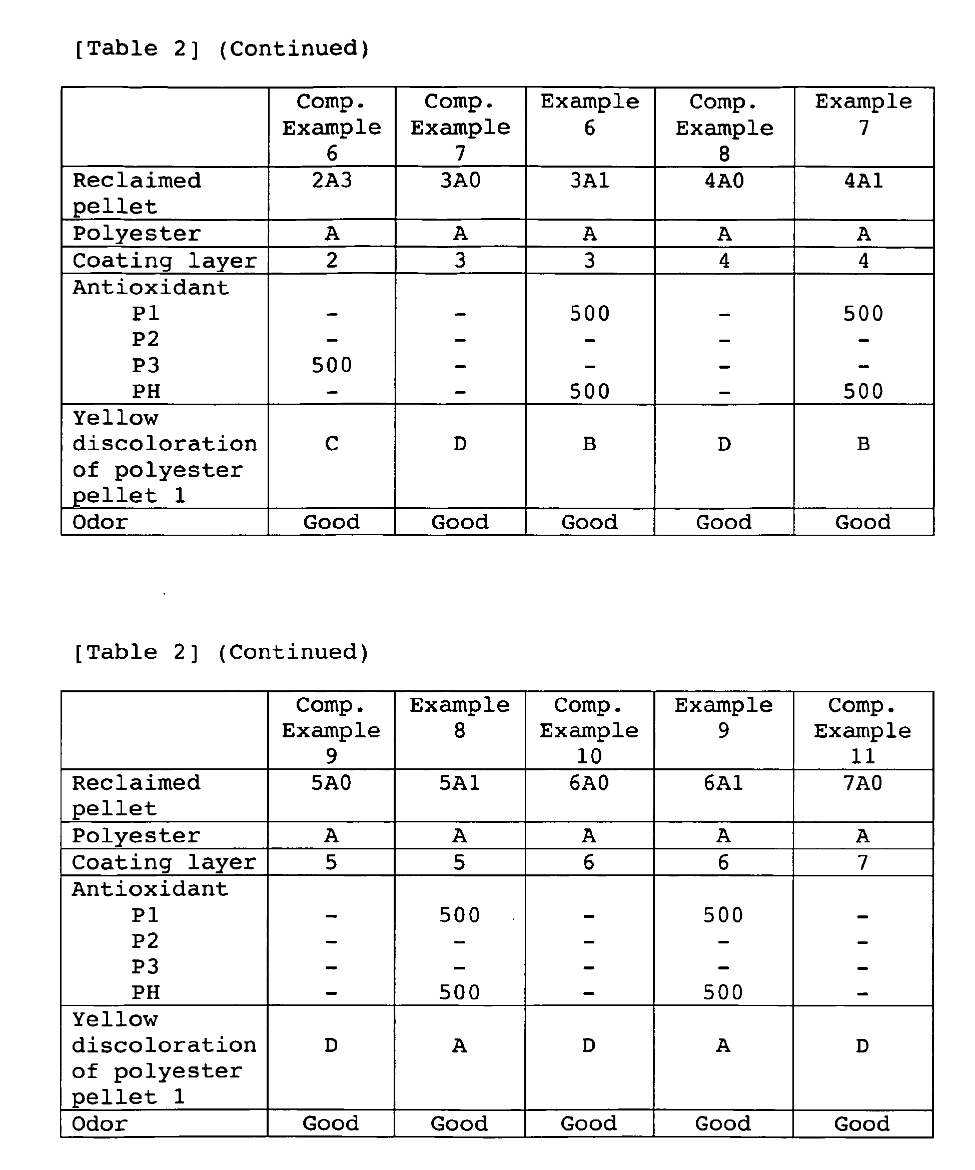

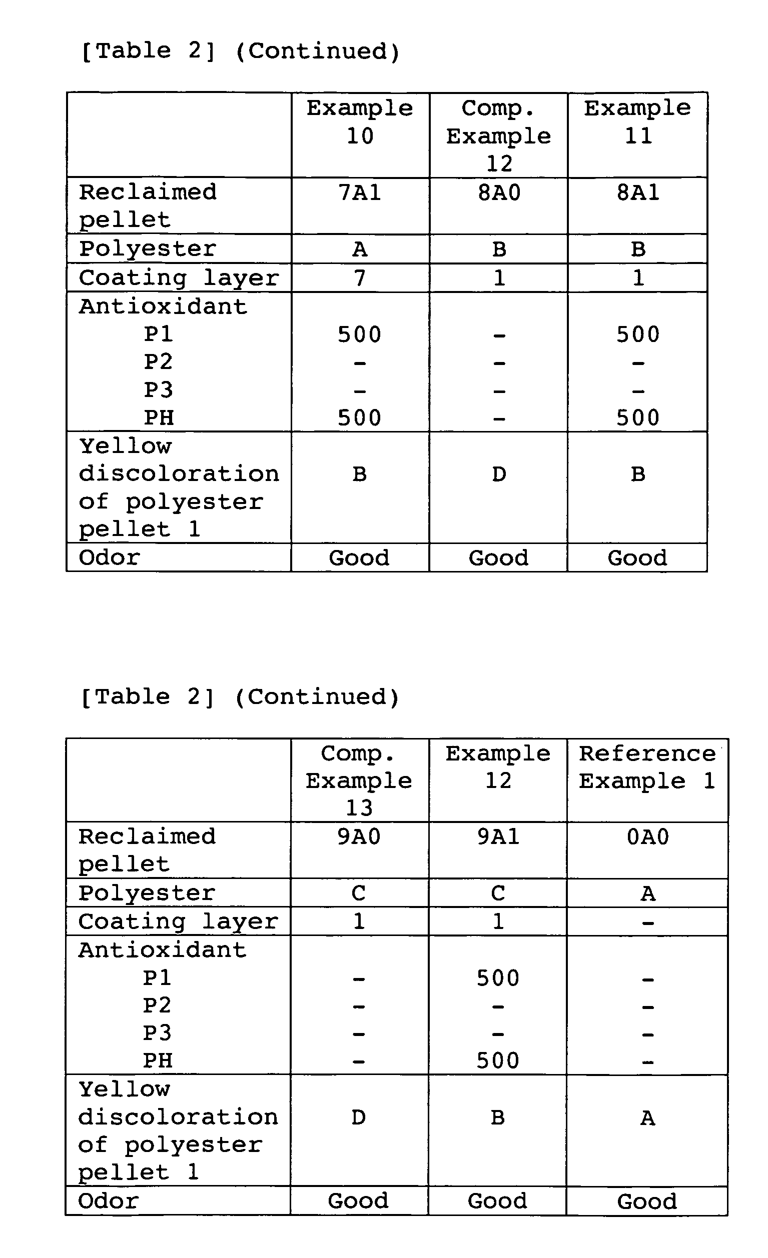

Reclaimed films were produced by the following procedure.

### Comparative Example 1:

30 parts of ground flake of coated film A1 as the reclaimed resin and 70 parts of polyester (A) for the intermediate layer, and 95 parts of polyester (A) and 5 parts of polyester (D) for the surface layers, were mixed respectively, heat-melted at 285 to 290°C respectively, extruded from a T-die for two kinds and three layers and quenched on quenching drums at 40°C to solidify it and form an unstretched sheet. The sheet was stretched for 3.6 times in the machine direction at 85 to 100°C to obtain a monoaxial stretched film. Onto both the surfaces of the film, the coating composition of coating layer 1 shown in the above Table 1 was coated by use of bar coater equipment. After the obtained coated film was dried at 90 to 105°C, the dried film was stretched for 4.3 times in the transverse direction at 110°C and heat-treated at.225 to 230°C to obtain a reclaimed film 1A0 having a thickness of 100 µm (both the surface layers: 5 µm, respectively and the intermediate layer: 90 µm) and coating amount of 0.1 g/m².

### Example 1:

30 parts of ground flake of coated film A1 as the reclaimed resin and 70 parts of polyester (A) for the intermediate layer, and 95 parts of polyester (A) and 5 parts of polyester (D) for the surface layers, were mixed respectively, heat-melted at 285 to 290°C respectively while directly adding an antioxidant into the materials for the intermediate layer, extruded from a T-die for two kinds and three layers and quenched on quenching drums at 40°C to solidify it and form an unstretched sheet. The sheet was stretched for 3.6 times in the machine direction at 85 to 100°C to obtain a monoaxial stretched film. Onto both the surfaces of the film, the coating composition of coating layer 1 shown in the above Table 1 was coated by use of bar coater equipment. After the obtained coated film was dried at 90 to 105°C, the dried film was stretched for 4.3 times in the transverse direction at 110°C and heat-treated at 225 to 230°C to obtain a reclaimed film 1A1 having a thickness of 100 µm (both the surface layers: 5 µm, respectively and the intermediate layer: 90 µm) and coating amount of 0.1 g/m². The amount of added antioxidant was 100 ppm based on the reclaimed film layer.

Further, in Examples 1 to 7 and Comparative Examples 1 to 13, respective reclaimed pellets were obtained by varying the kind and amount of antioxidants as shown in the following Table 3.

### Example 8:

30 parts of ground flake of coated film A1 as the reclaimed resin, 67 parts of polyester (A) and 3 parts of polyester (D) were mixed, heat-melted at 285 to 290°C while directly adding an antioxidant thereinto, extruded from a T-die and quenched on quenching drums at 40°C to solidify it and form an unstretched sheet. The sheet was stretched for 3.6 times in the machine direction at 85 to 100°C to obtain a monoaxial stretched film. Onto both the surfaces of the film, the coating composition of coating layer 1 shown in the above Table 1 was coated by use of bar coater equipment. After the obtained coated film was dried at 90 to 105°C, the dried film was stretched for 4.3 times in the transverse direction at 110°C and heat-treated at 225 to 230°C to obtain a reclaimed film 1A8 having a thickness of 100 µm (single layer) and coating amount of 0.1 g/m². The amount of added antioxidant was 100 ppm based on the reclaimed film layer.

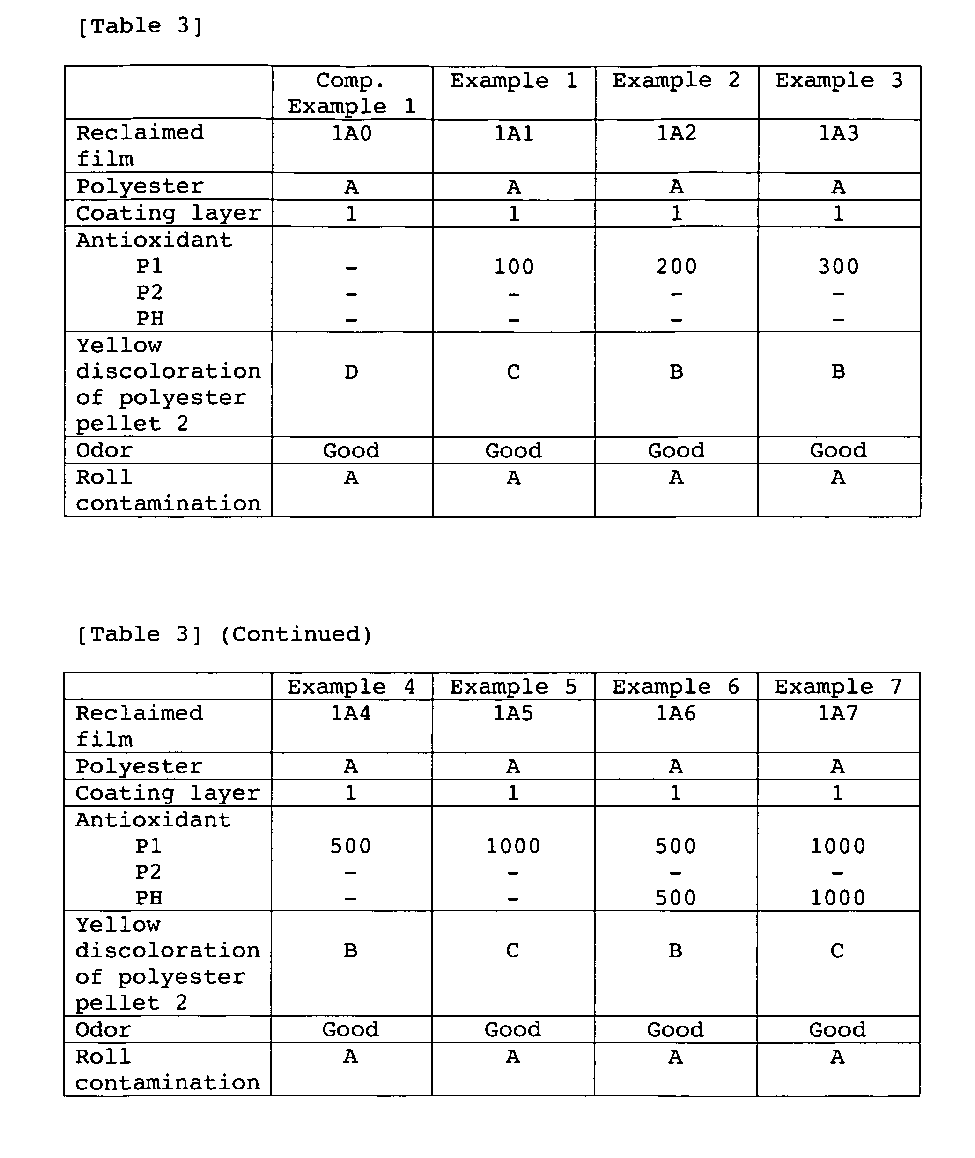

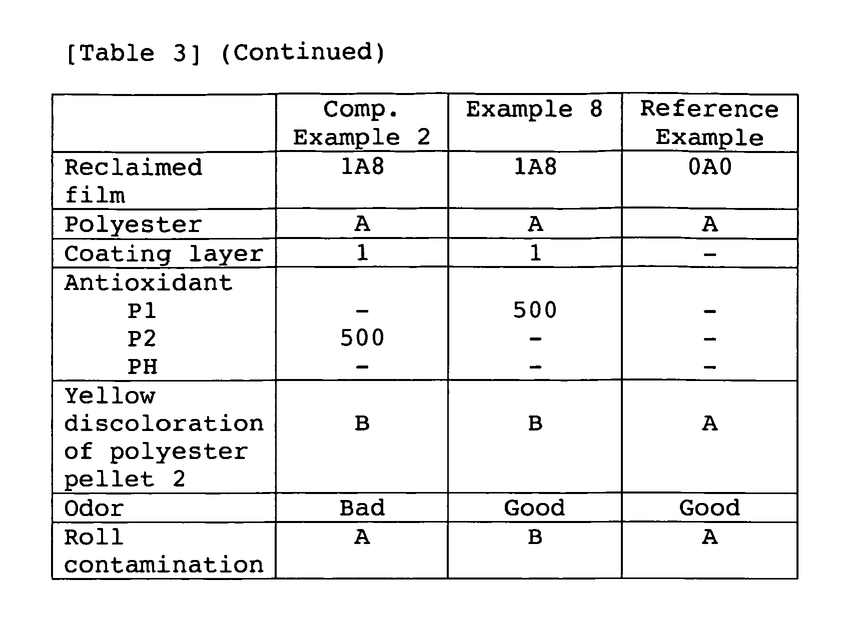

### APPLICABILITY FOR INDUSTRY

The film according to the present invention can be suitably used for optical filters (for example AR films, NIR films and EMI films), films for liquid crystal applications (for example diffraction films and prism films), materials for electric appliance, films for packaging, materials for graphic appliance (photograph materials), plate making films, OHP films or the like.

## Claims

1. A polyester film comprising at least one polyester layer comprising reclaimed resin of polyester film having a coating layer, which polyester layer comprising a phosphorus-based antioxidant having a starting temperature of loss on heat of not lower than 290°C.
